# EUROPEAN PATENT APPLICATION

(11) **EP 3 193 260 A2**
(43) Date of publication of application: **19.07.2017**
(21) Application number: 16203709.7
(22) Date of filing: 13.12.2016
(51) Int. Cl.: G06F 17/22

(54) **ENCODING PROGRAM, ENCODING METHOD, ENCODING DEVICE, DECODING PROGRAM, DECODING METHOD, AND DECODING DEVICE**

(30) Priority: 13.01.2016 JP 2016004797
(71) Applicant: FUJITSU LIMITED, Kawasaki-shi Kanagawa 211-8588 (JP)
(72) Inventor: Ideuchi, Masao, Kanagawa, 211-8588 (JP); Kataoka, Masahiro, Kanagawa, 211-8588 (JP); Tao, Kosuke, Kanagawa, 211-8588 (JP)
(74) Representative: Hoffmann Eitle

(57) **Abstract**

An encoding device (10) includes an identification unit (41) and an encoding unit (42). The identification unit (41) is configured to identify document structure of a first structured document. The encoding unit (42) is configured to encode a character string in a specific hierarchy of the first structured document with an encoding rule corresponding to the specific hierarchy utilizing the document structure.

## Description

### FIELD

The embodiments discussed herein are related to an encoding program, an encoding method, an encoding device, a decoding program, a decoding method, and a decoding device.

### BACKGROUND

For example, structured document data such as Extensible Markup Language (XML) have been utilized. XML has widely been spread as, for example, a compatible format for exchanging data between different systems. A variety of document data are disclosed in a structured format such as XML. Herein, structured document data are stored, for example, in such a manner that the whole is compressed in a compression format such as zip, in order to reduce an amount of data for storage or communication thereof. In a case where compressed document data are utilized, decompression of the whole of the compressed document data is executed to restore the document data and a variety of analyses are executed for the restored document data. For example, in a case where whether a specific word is included in a specific hierarchy of document data is searched, a lexical analysis or a structural analysis is executed for restored document data.
Japanese Laid-open Patent Publication No. 2005-215951
Japanese Laid-open Patent Publication No. 2002-297568
Japanese Laid-open Patent Publication No. 2005-018672

However, in a case where document data with the whole having been compressed in a compression format such as zip are utilized, the whole of the compressed document data is decompressed and subsequently a variety of analyses are executed, so that an amount of processing is high. Compressed document data may be utilized in a terminal with a low processing capacity such as a mobile terminal, and when an amount of processing for utilization thereof is high, the processing is time-consuming. Even in a case where only a part of document structure in a structured document is utilized, the whole of the document is decompressed in a case where the whole has been compressed in a compression format such as zip.

Accordingly, it is an object in one aspect of an embodiment of the invention to provide an encoding program, an encoding method, an encoding device, a decoding program, a decoding method, and a decoding device that execute encoding or decoding that corresponds to document structure.

### SUMMARY

According to an aspect of the embodiments, an encoding program causes a computer to execute a process including: identifying document structure of a first structured document; and encoding a character string in a specific hierarchy of the first structured document with an encoding rule corresponding to the specific hierarchy utilizing the document structure.

### BRIEF DESCRIPTION OF DRAWINGS

FIG. 1 is a diagram schematically illustrating a flow of an encoding process;
FIG. 2A is a diagram schematically illustrating a flow of a searching process;
FIG. 2B is a diagram schematically illustrating a flow of a searching process in a case where an index is not created;
FIG. 3 is a diagram illustrating an example of a configuration of an encoding device;
FIG. 4 is a diagram illustrating an example of assignment of a code;
FIG. 5 is a diagram illustrating an example of assignment of a code;
FIG. 6 is a diagram illustrating a schematic configuration of a schema;
FIG. 7A is a diagram illustrating an example of a document with document structure indicated by a tag;
FIG. 7B is a diagram illustrating an example of a document with metadata provided on a part of the document by a tag;
FIG. 8A is a diagram illustrating an example of encoding;
FIG. 8B is a diagram illustrating an example of encoding;
FIG. 9 is a diagram schematically illustrating a flow of encoding;
FIG. 10A is a diagram illustrating an example of searching;
FIG. 10B is a diagram illustrating an example of searching;
FIG. 11 is a flowchart illustrating an example of steps of an encoding process;
FIG. 12 is a flowchart illustrating an example of steps of a searching process;
FIG. 13 is a flowchart illustrating an example of steps of a searching process;
FIG. 14 is a flowchart illustrating an example of steps of a decoding process;
FIG. 15 is a diagram illustrating an example of assignment of a code;
FIG. 16 is a diagram illustrating an example of a computer that executes an encoding program;
FIG. 17 is a diagram illustrating a computer that executes a searching program; and
FIG. 18 is a diagram illustrating an example of a computer that executes a decoding program.

### DESCRIPTION OF EMBODIMENTS

Preferred embodiments will be explained with reference to accompanying drawings. The scope of the right is not limited by the embodiments. It is possible to combine the respective embodiments with one another appropriately as long as processing contents thereof are consistent with one another.

### Encoding Process

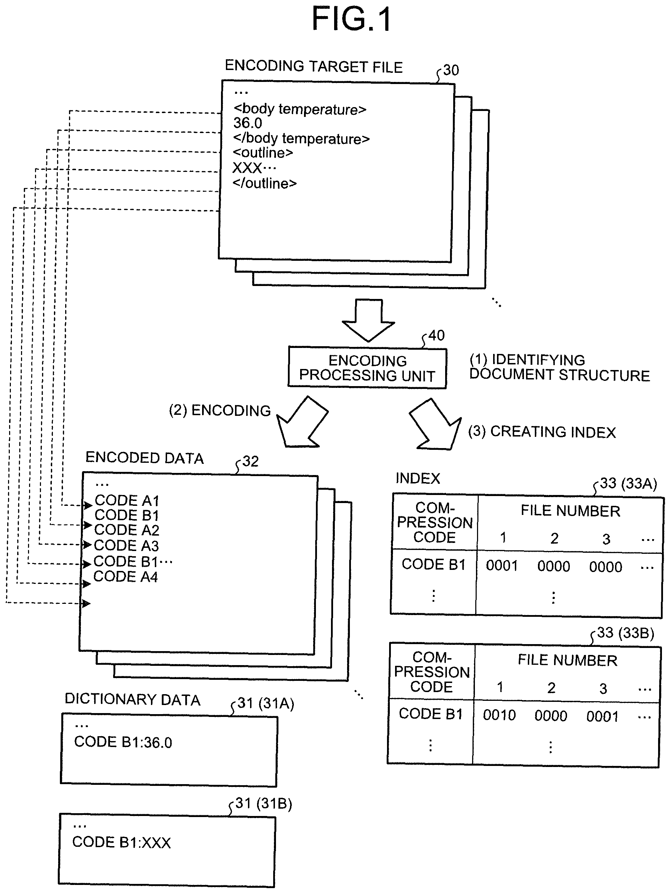

First, an outline of an encoding process will be described by using FIG. 1. FIG. 1 is a diagram schematically illustrating a flow of an encoding process. Hereinafter, a case where an encoding target file 30 with a structured document stored therein is encoded will be described as an example.

The encoding target file 30 stores a document structured by, for example, XML. In XML, a document is structured in such a manner that the document is described by text and elements of the document are delimited by tags. An example of FIG. 1 illustrates a case where data of a medical record of a patient in a hospital are provided as a document structured by XML. In the example of FIG. 1, a body temperature of "36.0" is recorded with a tag with an element name of "body temperature". An outline of "XXX..." of a patient is recorded with a tag with an element name of "outline". The encoding target file 30 may be any structured document.

In a case where encoding of the encoding target file 30 is executed, an encoding processing unit 40 of an encoding device 10 reads a document stored in the encoding target file 30 and identifies document structure of the document (FIG. 1 (1)). For example, in a case where a schema of XML (Schema) that corresponds to the encoding target file 30 is defined, the encoding processing unit 40 may identify document structure from the schema that corresponds to the encoding target file 30 or may identify document structure by analyzing the document.

The encoding processing unit 40 encodes the read document according to an encoding rule for hierarchical structure that corresponds to document structure, and stores encoded data as encoded data 32 (FIG. 1 (2)).

For example, the encoding processing unit 40 encodes character strings that define document structure according to a common encoding rule. In the example of FIG. 1, a tag of "<body temperature>" that indicates document structure is encoded into a code A1, a tag of "</body temperature>" is encoded into a code A2, a tag of "<outline>" is encoded into a code A3, and a tag of "</outline>" is encoded into a code A4. A code of an end tag may be a code different from a code of a start tag or may be provided by combining the code of a start tag with a code that indicates an end of a tag.

For example, the encoding processing unit 40 encodes a character string in each hierarchy according to an encoding rule that corresponds to a characteristic of a character string that appears in the hierarchy. It is sufficient that a code that is assigned in encoding is unique for each encoding rule. Thus, in a case where a character string that appears in a hierarchy is encoded according to an encoding rule for the hierarchy, it is sufficient that a code is unique for each hierarchy. For this reason, as hierarchies are different, an identical code can be assigned to different character strings. In the example of FIG. 1, a character string of "36.0" in a hierarchy of "body temperature" is encoded into a code B1, and "XXX" of a character string of "XXX..." in a hierarchy of "outline" is encoded into a code B1. For example, the encoding processing unit 40 encodes a character string in each hierarchy according to an encoding rule that converts a pattern such as a character or a word with a high appearance frequency into a short code. Thereby, a pattern with a high appearance frequency among a variety of patterns that are included in a character string can be converted into a short code in each hierarchy, and hence, the whole of the encoding target file 30 can be converted into short codes.

The encoding processing unit 40 stores a character string to be converted and a code that corresponds to the character string in dictionary data 31 for an encoding rule. In the example of FIG. 1, the character string of "36.0" and the code B1 are associated with one another and stored in dictionary data 31A, and a character string of "XXX" and the code B1 are associated with one another and stored in dictionary data 31B.

The encoding processing unit 40 creates, for each encoding rule, an index 33 that indicates a pattern that appears in an encoded character string (FIG. 1 (3)). An index is data that indicate a file that includes a pattern. An index includes, for example, a bitmap-type index that associates a pattern or a file with one bit and stores whether or not the pattern appears based on a value of the bit. An index also includes a count-map-type index that associates a pattern or a file with a plurality of bits and holds information of the number of appearances of the pattern by the plurality of bits. In the example of FIG. 1, the encoding processing unit 40 creates count-map-type indices 33A and 33B. The index 33A holds information of the number of appearances of a pattern that appears in a character string in the hierarchy of "body temperature". The index 33B holds information of the number of appearances of a pattern that appears in a character string in the hierarchy of "outline". In the example of FIG. 1, each of the indices 33A and 33B stores, by a plurality of bits, the number of appearances that is associated with a file number of "1" of the encoding target file 30 and the code B1. In the present embodiment, although a case where the indices 33A and 33B are created in encoding is described, the encoding processing unit 40 is not limited thereto and can be modified appropriately. For example, the encoding processing unit 40 may create none of the indices 33A and 33B.

### Searching Process

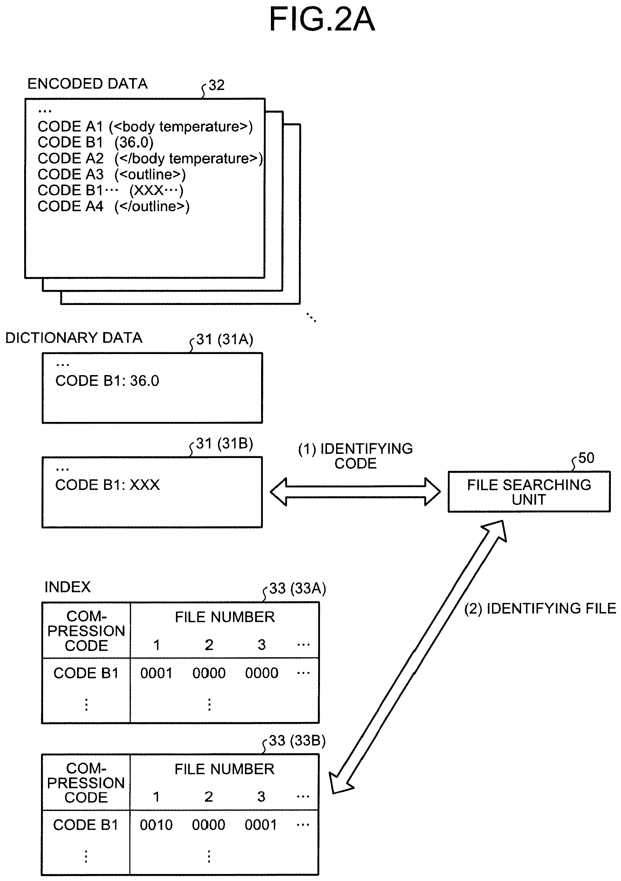

Next, an outline of a searching process that is executed by the encoding device 10 according to a first embodiment will be described by using FIG. 2A. FIG. 2A is a diagram schematically illustrating a flow of a searching process. An example of FIG. 2A illustrates the encoded data 32 that have been encoded in FIG. 1, the dictionary data 31A and 31B, and indices 33A and 33B. In the example of FIG. 2A, an encoded character string enclosed in parentheses of "( )" is noted behind a code in the encoded data 32 in order to facilitate understanding of the encoded character string.

A file searching unit 50 of the encoding device 10 accepts input of a search condition. For example, in the example of FIG. 2A, the file searching unit 50 accepts a search condition such as the hierarchy of "outline" or the character string of "XXX".

The file searching unit 50 searches a file that satisfies a search condition. For example, the file searching unit 50 refers to the dictionary data 31B provided by converting a character string in the hierarchy of "outline" and identifies the code B1 that corresponds to the character string of "XXX" (FIG. 2A (1)). The file searching unit 50 refers to the index 33B created by converting a character string in the hierarchy of "outline" and identifies a file number of a file with the code B1 appearing therein (FIG. 2A (2)). In the example of FIG. 2A, the index 33 is associated with the file number of "1" of the encoding target file 30 and the code B1 to store the number of appearances, and hence, searching is executed when the encoding target file 30 with the file number of "1" satisfies a search condition. Thus, in a case where searching of a character string is executed in the encoded data 32 that have been encoded, the encoding device 10 can search the character string without decoding the encoded data 32, and hence, an amount of processing for utilization thereof can be reduced.

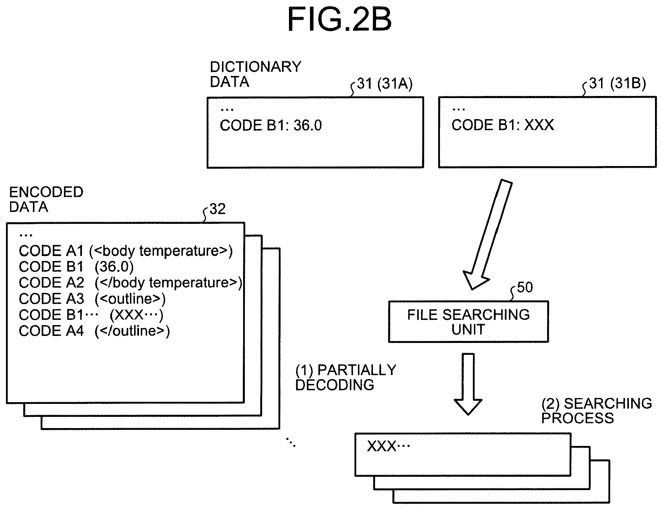

As described above, none of the indices 33A and 33B may be created. FIG. 2B is a diagram schematically illustrating a flow of a searching process in a case where an index is not created. An example of FIG. 2B illustrates the encoded data 32 that have been encoded in FIG. 1 and the dictionary data 31. Also in the example of FIG. 2B, an encoded character string enclosed in parentheses of "( )" is noted behind a code in the encoded data 32 in order to facilitate understanding of the encoded character string.

The file searching unit 50 accepts input of a search condition. For example, in the example of FIG. 2B, the file searching unit 50 accepts a search condition such as the hierarchy of "outline" or the character string of "XXX".

The file searching unit 50 searches a file that satisfies a search condition. For example, the file searching unit 50 decodes tags encoded by a common encoding rule. The file searching unit 50 refers to the dictionary data 31B provided by converting a character string in the hierarchy of "outline" and partially decodes a code in the hierarchy of "outline" (FIG. 2B (1)). The file searching unit 50 searches the character string of "XXX" from a decoded part (FIG. 2B (2)). Also in this case, the file searching unit 50 can only partially decode a code in the hierarchy of "outline" to execute searching, and hence, an amount of processing for utilization thereof can be reduced as compared with a case the whole of the encoded data are decoded.

### Device Configuration

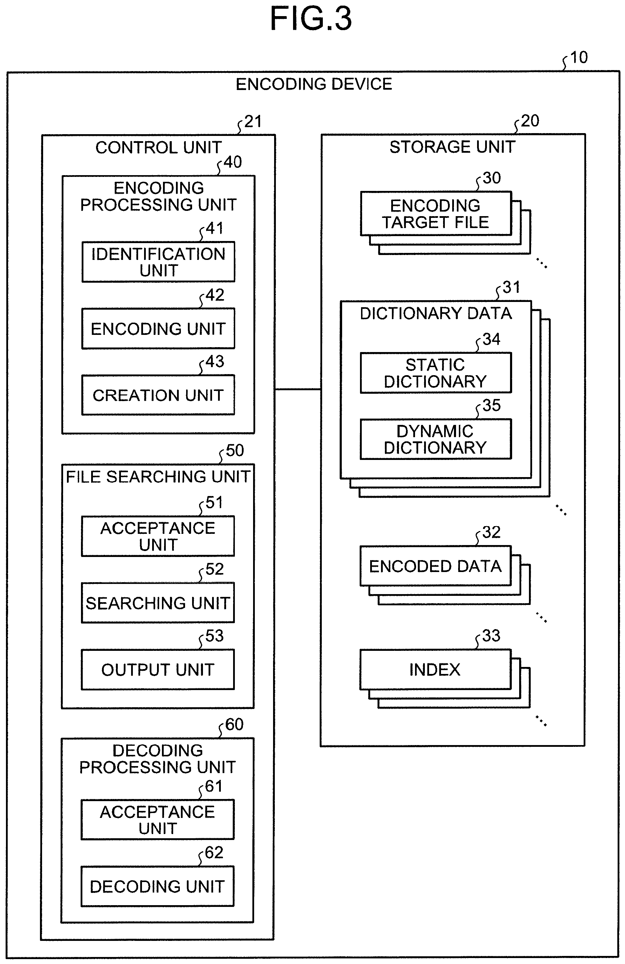

Next, a configuration of the encoding device 10 will be described. FIG. 3 is a diagram illustrating an example of a configuration of the encoding device 10. The encoding device 10 is a device that executes encoding such as compression of a structured document. The encoding device 10 is, for example, a computer such as a personal computer or a server computer or an information processing device such as a tablet terminal or a smartphone. The encoding device 10 may be implemented as a single computer and can be implemented as a cloud for a plurality of computers. In the present embodiment, a case where the encoding device 10 is a single computer will be described as an example. As illustrated in FIG. 3, the encoding device 10 includes a storage unit 20 and a control unit 21. The encoding device 10 may include another instrument other than the instruments as described above that is included in a computer or an information processing device. In the present embodiment, although a case where encoding and file searching are executed by the encoding device 10 will be described as an example, encoding and file searching may be executed by different devices.

The storage unit 20 is a storage device such as a hard disk, a Solid State Drive (SSD), or an optical disk. The storage unit 20 may be a data-rewritable semiconductor memory such as a Random Access Memory (RAM), or a flash memory, a Non-Volatile Static Random Access Memory (NVSRAM).

The storage unit 20 stores an Operating System (OS) and a variety of programs that are executed by the control unit 21. For example, the storage unit 20 stores programs for executing an encoding process and a searching process as described later. The storage unit 20 also stores a variety of data that are used for the programs that are executed by the control unit 21. For example, the storage unit 20 stores an encoding target file 30, dictionary data 31, encoded data 32, and an index 33.

The encoding target file 30 are data provided by storing text data of an encoding target. For example, a document structured by XML is stored in the encoding target file 30.

The dictionary data 31 are data of a dictionary that is used for encoding and decoding of data.

In the present embodiment, when a structured document is encoded, an encoding rule is switched depending on structure or an attribute thereof. The dictionary data 31 are data of a dictionary that is used for an encoding rule that uses the dictionary to execute encoding. The dictionary data 31 are provided for each encoding rule that uses a dictionary to execute encoding. For example, the dictionary data 31 are provided for each hierarchy where a dictionary is used to execute encoding or each of hierarchies where a dictionary is used to execute encoding and data attributes thereof are similar to one another, among hierarchies of a hierarchized document. The dictionary data 31 include a static dictionary 34 and a dynamic dictionary 35.

The static dictionary 34 is data that hold a code that corresponds to a pattern with a high appearance frequency depending on structure or an attribute of a document. The dynamic dictionary 35 is data that hold a code that corresponds to a pattern with a low appearance frequency depending on structure or an attribute of a document. The static dictionary 34 is preliminarily provided. The dynamic dictionary 35 is dynamically created as needed.

The static dictionary 34 stores a code that corresponds to a character string, according to a characteristic of a character string that appears in a corresponding hierarchy. For example, the static dictionary 34 stores a code that corresponds to a character string or a pattern such as a number that normally appears in a corresponding hierarchy. The static dictionary 34 stores a pattern with a high appearance frequency in a corresponding hierarchy that has been associated with a short code. For example, a human body temperature normally falls within a range of 35.0 °C to 42.0 °C and is around 36.0 °C with a high appearance frequency. Accordingly, for example, the static dictionary 34 that corresponds to a hierarchy of a body temperature stores numerical values of 35.0 to 42.0 that have been associated with codes, and stores around 36.0 that has been assigned with a short code. In the present embodiment, a character string that appears in an outline is encoded in units of words. For example, in the present embodiment, a general document is analyzed, and thereby, words are classified into high-frequency words with a relatively high appearance frequency and low-frequency words with a relatively low appearance frequency. For example, high-frequency words are basic words from a top to a predetermined ranking in a descending order of an appearance frequency while low-frequency words are basic words from the predetermined ranking to a bottom. A high-frequency word is preliminarily assigned with a short code, and the high-frequency word and the assigned code are associated with one another and stored in the static dictionary 34. For example, a high-frequency word is preliminarily assigned with a 2-byte (16-bit) code and the assigned code is preliminarily stored in the static dictionary 34. A low-frequency word is dynamically assigned with a code when the low-frequency word appears, and the assigned code is stored in the dynamic dictionary 35. That is, a code is preliminarily registered for a high-frequency word, and dynamically assigned and stored in the dynamic dictionary 35 for a low-frequency word. In a case where a character string or a pattern such as a number that appears in an outline is determined as a specific pattern, the specific pattern and a code are associated with one another and preliminarily stored in the static dictionary 34 that corresponds to a hierarchy of the outline.

The dynamic dictionary 35 is data that hold a variety of information with respect to a dynamically assigned code, according to a characteristic of a character string that appears in a corresponding hierarchy. For example, the dynamic dictionary 35 that corresponds to a hierarchy of an outline stores a code that is dynamically assigned to a pattern with a low appearance frequency such as a low-frequency word.

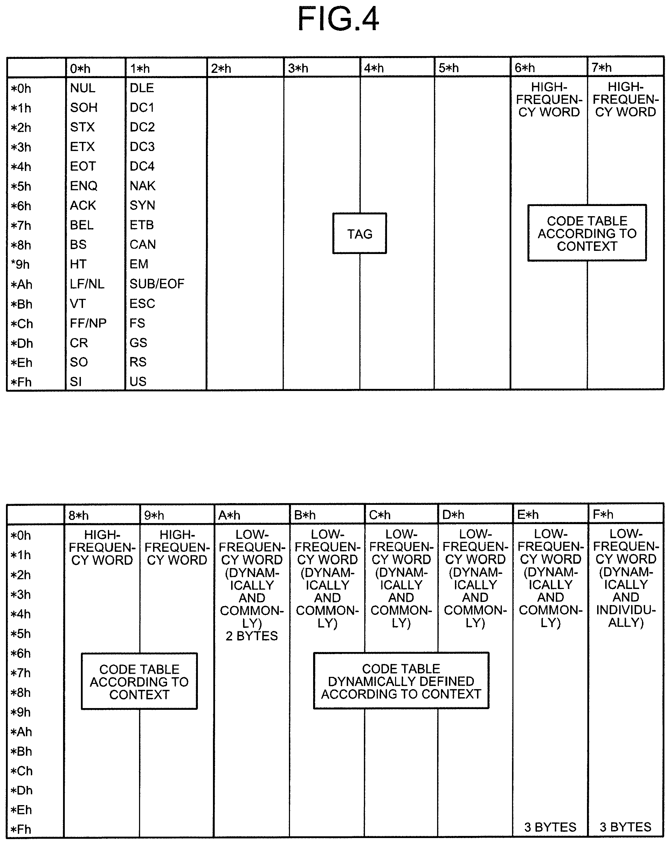

FIG. 4 is a diagram illustrating an example of assignment of a code. FIG. 4 illustrates an example of assignment of 2-byte (16-bit) code. An item in an upper part and in transverse directions indicates a first byte in hexadecimal notation of 0 to F, and "*" indicates a second byte. For example, "1*h" indicates that a first byte is "00000001" in binary notation. An item at a left side and in longitudinal directions indicates a second byte in hexadecimal notation of 0 to F and "*" indicates a first byte. For example, "*2h" indicates that a second byte is "00000010" in binary notation.

FIG. 4 illustrates a pattern that corresponds to a code in an area that corresponds to an item in longitudinal directions and an item in transverse directions. For example, for codes of "0*h" and "1*h", an identical code corresponds to an identical control code in each hierarchy. For codes of "2*h" to "5*h", an identical code corresponds to an identical tag in each hierarchy. For codes of "6*h" to "F*h", it is possible to assign a code to a pattern individually in each hierarchy. For example, in a case where a character string is encoded in units of words, codes of "6*h" to "9*h" are assigned to predetermined high-frequency words. For codes of "A*h" to "F*h", the codes are dynamically assigned when low-frequency words appear. "E*h" and "F*h" are 3-byte codes in order to address a lack of a code.

The dictionary data 31 are provided in each hierarchy where a dictionary is used to execute encoding or each of hierarchies where a dictionary is used to execute encoding and data attributes thereof are similar to one another, and for codes of "6*h" to "F*h", a character string and a code are associated with one another and stored, according to a characteristic of a character string that appears in a hierarchy.

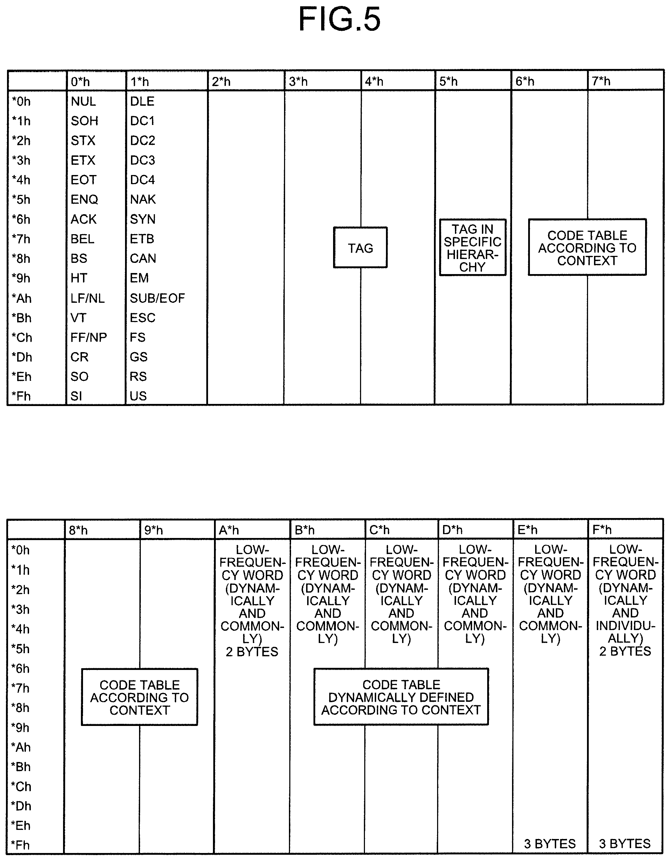

The dictionary data 31 may be capable of dynamically assigning a code to a tag. FIG. 5 is a diagram illustrating an example of assignment of a code. In an example of FIG. 5, for a code of "5*h", a first byte is capable of dynamically assigning a code as a tag in a specific hierarchy.

By returning to FIG. 3, the encoded data 32 are data provided by encoding the encoding target data 30. The index 33 is data provided by storing the number of appearances of a pattern that appears in an encoded character string. For example, the index 33 is provided for each encoding rule, and associates and stores an encoded character string with the number of appearances of an appearing pattern and a file number of an appearing file.

The control unit 21 is a device that controls the encoding device 10. For the control unit 21, an electronic circuit such as a Central Processing Unit (CPU) or a Micro Processing Unit (MPU), or an integrated circuit such as an Application Specific Integrated Circuit (ASIC) or a Field Programmable Gate Array (FPGA) can be employed. The control unit 21 includes an internal memory for storing a program that defines a variety of processing steps, and control data, and thereby, executes a variety of processes. The control unit 21 functions as a variety of processing units when a variety of programs operate. For example, the control unit 21 includes an encoding processing unit 40, a file searching unit 50, and a decoding processing unit 60.

The encoding processing unit 40 reads a structured document stored in the encoding target file 30 and creates the encoded data 32 provided by encoding the read document according to an encoding rule for hierarchical structure that corresponds to document structure. The encoding processing unit 40 includes an identification unit 41, an encoding unit 42, and a creation unit 43.

The identification unit 41 executes a variety of identification. For example, the identification unit 41 identifies document structure of an XML document stored in the encoding target file 30. For example, in a case where a schema of XML is defined so as to correspond to the encoding target file 30, the identification unit 41 identifies document structure based on the schema that corresponds to the encoding target file 30.

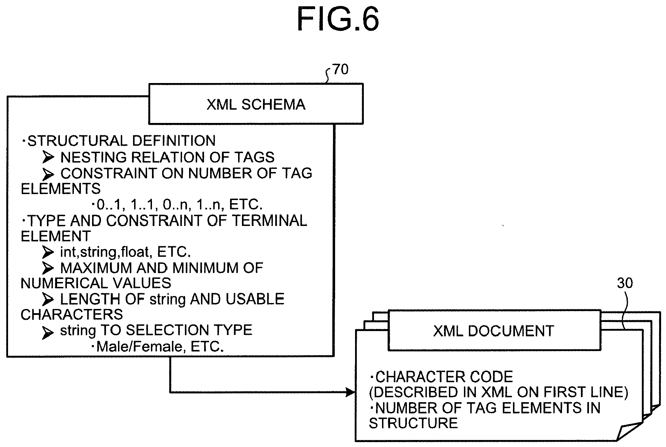

FIG. 6 is a diagram illustrating a general configuration of a schema. In an XML document, an XML schema 70 that indicates document structure is defined. The XML schema 70 describes a definition of document structure of an XML document and a definition of a type and a constraint of a terminal element in schema language. In an example of FIG. 6, for a structural definition, a nesting relation of tags that indicate document structure, constraints on the tags, and the like are described. In the example of FIG. 6, for a type and a constraint of a terminal element, a data type of a character string to be stored, a maximum and a minimum of numerical values, a length of a string (character string), usable characters, and whether a string is used as, for example, a selection type of Male, Female, or the like are described. The encoding target file 30 stores a document in XML according to the definitions of the XML schema 70. In the example of FIG. 6, an XML document describes a character code on a first line, and the document with document structure that corresponds to the XML schema 70 is stored. The XML schema 70 can flexibly define document structure and can also execute a definition capable of changing the number of tags in the encoding target file 30. For example, an encoding target file 30A can also have document structure where ten Y-tags are present under an X-tag and an encoding target file 30B can also have document structure where twenty Y-tags are present under an X-tag.

In a case where the XML schema 70 is defined so as to correspond to the encoding target file 30, the identification unit 41 identifies document structure based on the XML schema 70. The identification unit 41 may analyze a document stored in the encoding target file 30 to identify document structure.

The encoding unit 42 executes encoding of a document stored in the encoding target file 30. For example, the encoding unit 42 reads an XML document with document structure identified by the identification unit 41 from the encoding target file 30. The encoding unit 42 encodes the read document according to an encoding rule for hierarchical structure that corresponds to the document structure. For example, the encoding unit 42 sequentially assigns codes to tags that appear in the read document to execute encoding thereof. In a case where a tag that appears in document structure is defined, dictionary data for tag with a tag and a code that have been associated with one another are stored preliminarily, and the encoding unit 42 may use the dictionary data for tag to encode a tag that appears in the read document. Some tags with a high appearance frequency in document structure are stored in dictionary data for tag and the encoding unit 42 may use the dictionary data for tag to encode some tags with high appearance frequency and sequentially assign codes to other tags to execute encoding.

Herein, a structured document includes a document with document structure indicated by delimiting document elements by tags and a document with metadata provided on a part of the document by a tag.

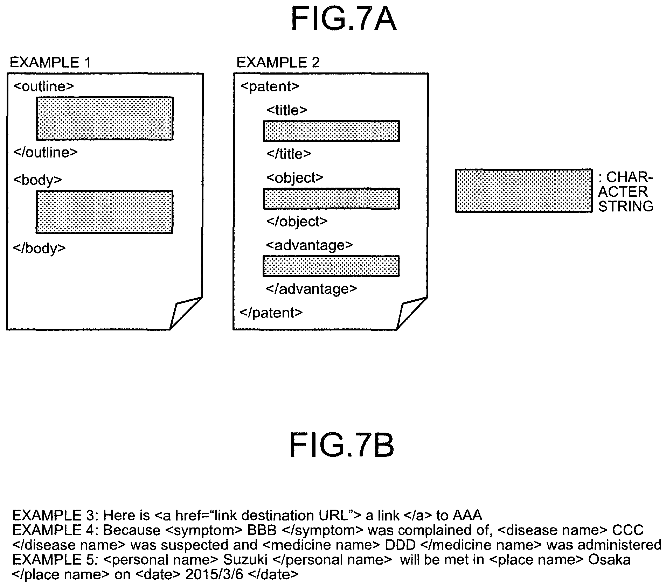

FIG. 7A is a diagram illustrating an example of a document with document structure indicated by a tag. In an example of FIG. 7A, "outline" and "body" are defined by tags in a document of example 1. For the document of example 1, a document is illustrated that stores a character string (text) that corresponds to content in each of parts of "outline" and "body" delimited by tags. In a document of example 2, "patent" is defined by a tag, and "title", "object", and "advantage" are defined at a lower level than "patent". For the document of example 2, a document is illustrated that stores a character string that corresponds to content in each of parts of "title", "object", and "advantage" delimited by tags.

The encoding unit 42 encodes tags according to a common encoding rule. For the document of example 1, tags of "outline" and "body" are encoded according to a common encoding rule. For the document of example 2, tags of "patent", "title", "object", and "advantage" are encoded according to a common encoding rule.

The encoding unit 42 encodes a character string in a part delimited by tags according to an encoding rule that corresponds to each hierarchy. For example, the encoding unit 42 encodes a character string in a part delimited by tags, by using the dictionary data 31 that correspond to each hierarchy. For example, in a case where a word that appears in a character string has been registered in the static dictionary 34 or the dynamic dictionary 35 of the dictionary data 31 that correspond to a hierarchy, the encoding unit 42 encodes the appearing word into a code registered in the static dictionary 34 or the dynamic dictionary 35. In a case where a word that appears in a character string has not been registered in the static dictionary 34 or the dynamic dictionary 35 of the dictionary data 31 that correspond to a hierarchy, the encoding unit 42 dynamically assigns a code thereto, so that the appearing word is encoded into the assigned code. The encoding unit 42 associates the appearing word and the assigned code with one another and registers the appearing word and the assigned code in the dynamic dictionary 35. Thereby, afterward, words registered in the dynamic dictionary 35 are encoded into an identical code by using the dynamic dictionary 35 when the words appear. The encoding unit 42 may encode character strings in hierarchies with similar data attributes according to an identical encoding rule. Thereby, the encoding unit 42 can encode character strings in hierarchies with similar data attributes based on the identical dictionary data 31.

FIG. 7B is a diagram illustrating an example of a document with metadata provided on a part of the document by a tag. In an example of FIG. 7B, a document of example 3 illustrates a case where a URL of a link destination is provided on a part of "link" in a document of "Here is a link to AAA" by tags as metadata. A document of example 4 illustrates a case where a part of "BBB" indicating a medical condition, a part of "CCC" indicating a disease name, and a part of "DDD" indicating a medicine name in a document of "Because BBB was complained of, CCC was suspected and DDD was administered" are provided by tags as metadata. A document of example 5 illustrates a case where a part of "Suzuki" indicating a personal name, a part of "Osaka" indicating a place name, and a part of "2015/3/6" indicating a date in a document of "Suzuki will be met in Osaka on 2015/3/6" are provided by tags as metadata.

The encoding unit 42 encodes tags according to a common encoding rule. For the document of example 3, a tag of "link" is encoded by a common encoding rule. For the document of example 4, tags of "medical condition", "disease name", and "medicine name" are encoded according to a common encoding rule. For the document of example 5, tags of "personal name", "place name", and "date" are encoded according to a common encoding rule. The encoding unit 42 encodes a character string on a part delimited by tags according to an encoding rule for each hierarchy. For example, the encoding unit 42 encodes a character string on a part delimited by tags by using the dictionary data 31 that correspond to each hierarchy.

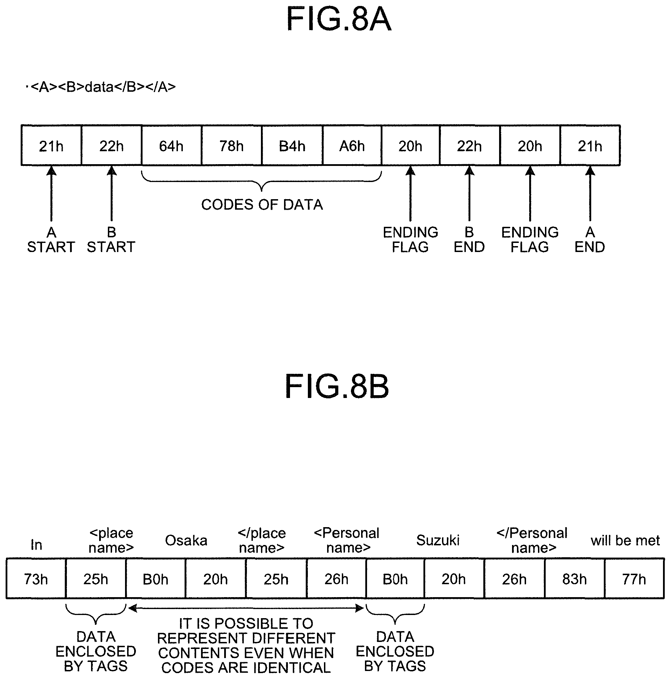

FIG. 8A is a diagram illustrating an example of encoding. An example of FIG. 8A illustrates an example of encoding of character string data that are a tag of "B" defined at a lower level than a tag of "A". In the example of FIG. 8A, a code provided by encoding the character string data is stored between codes of the tag of "A" and the tag of "B". In the example of FIG. 8A, a code of an end tag for the tag of "A" or the tag of "B" is provided by combining a code of a start tag with a code that indicates an end of a tag.

FIG. 8B is a diagram illustrating an example of encoding. An example of FIG. 8B illustrates an example of encoding of character string data that are a part of "Osaka" indicating a place name and a part of "Suzuki" indicating a personal name in a document of "In Osaka Suzuki will be met" are provided by tags as metadata. In the example of FIG. 8B, "Osaka" is encoded into "B0h" between a start code of "25h" and end codes of "20h" and "25h" of a place name. "Suzuki" is encoded into "B0h" between a start code of "26h" and end codes of "20h" and "26h" of a personal name.

The encoding unit 42 can assign an identical code to different character strings in different hierarchies, and hence, can convert a character string into a short code in each hierarchy. For example, in the example of FIG. 8B, both "Osaka" and "Suzuki" are converted into an identical "B0h". Thus, the encoding unit 42 can convert a character string into a short code in each hierarchy, and can convert the whole of the encoding target file 30 into short codes.

The encoding unit 42 may encode a character string on a part delimited by tags without using the dictionary data 31, depending on an attribute or a range of the character string. For example, in a case where a character string on a part delimited by tags is a character string that indicates a numerical value in a range of "0" to "255", the encoding unit 42 may encode the character string that indicates a numerical value in a range of "0" to "255" into a 1-byte integer-type (for example, int-type) code. That is, in a case where character strings indicate numerical values, the encoding unit 42 may encode the character strings into codes with a data type that corresponds to a range of the numerical values. As character strings that represent numerical values are encoded into codes with a data type of the numerical values, a variety of operations such as comparison or totalization of the numerical values can be executed even in encoded states thereof.

Herein, in a structured document in XML or the like, context is defined by a tag. Context of a structured document is defined by a tag and an element in association with data processing is determined by the context. For example, an element in association with a dictionary is determined, such as a type or a value range of data, or a component of a document (with respect to language, a Japanese word, an English word, or a word in another language). For example, how data content can be utilized, namely, a field of utilization thereof, such as searching or mining for text, or an average value, a total value, or a frequency distribution for numerical values, is determined. As illustrated in FIG. 7A, a document with document structure indicated by tags includes context that is identified by tracing not only a single set of tags but also hierarchical structure in order from a top level thereof. For example, in <A> <total> T </total> </A>, "T" indicates a total of A. For example, as illustrated in FIG. 7B, a document with metadata provided on a part of the document by a tag includes additional context, in addition to hierarchical structure, in a region enclosed by a single set of tags. For example, <place name> Osaka </place name> indicates that "Osaka" is a place name. Hence, the encoding unit 42 encodes a character string on a part delimited by tags according to an encoding rule suitable for context that is defined by the tags, and thereby, can reduce an amount of processing for utilization thereof.

The encoding unit 42 stores encoded data of a document stored in the encoding target file 30 as the encoded data 32.

The creation unit 43 creates, for each encoding rule, the index 33 that indicates a pattern appearing in an encoded character string. For example, the creation unit 43 sequentially provides a file number to the encoding target file 30 that has been encoded. The creation unit 43 creates the index 33 that stores the number of appearances of a pattern such as a numerical value or a word that appears in the encoding target file 30, in association with a file number of the encoding target file 30 that has been encoded.

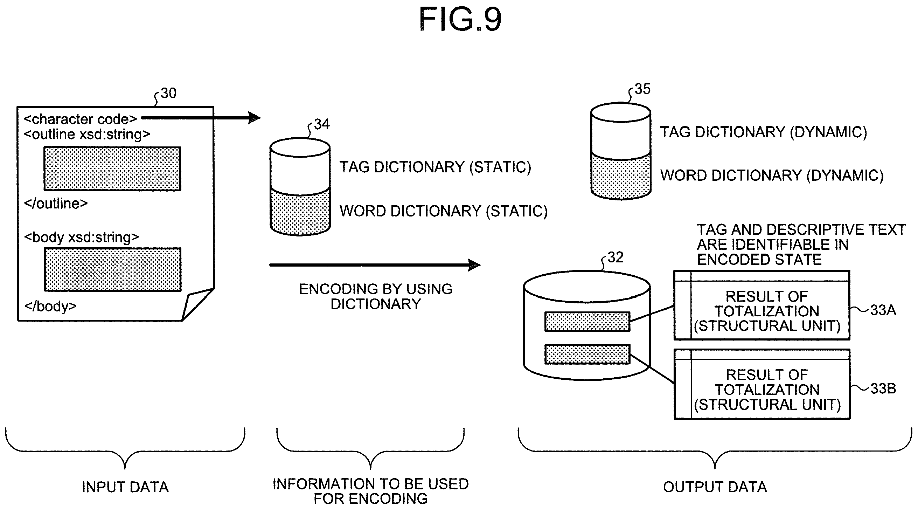

Herein, a flow of encoding will be described. FIG. 9 is a diagram schematically illustrating a flow of encoding. The encoding processing unit 40 of the encoding device 10 reads a document stored in the encoding target file 30 and identifies document structure of the document. The encoding processing unit 40 encodes the read document according to an encoding rule for hierarchical structure that corresponds to the document structure. For example, in a case where a word appearing in a tag or a character string has been registered in the static dictionary 34 or the dynamic dictionary 35, the encoding processing unit 40 encodes the appearing word into a code registered in the static dictionary 34 or the dynamic dictionary 35. In a case where a word appearing in a tag or a character string has not been registered in the static dictionary 34 or the dynamic dictionary 35, the encoding processing unit 40 dynamically assigns a code thereto and encodes the tag or the appearing word into the assigned code. The encoding processing unit 40 associates the tag or the appearing word and the assigned code with one another and registers the tag or the appearing word and the assigned code in the dynamic dictionary 35.

The encoding processing unit 40 stores encoded data of the document stored in the encoding target file 30, as the encoded data 32. In an example of FIG. 9, each of character strings in hierarchies of tags of "outline" and "body" has been encoded. The encoding processing unit 40 creates the index 33 that stores the number of appearances of a pattern such as a numerical value or a word that appears in the encoding target file 30, in association with a file number of the encoding target file 30. In the example of FIG. 9, indices 33A and 33B are created as results of totalization of the number of appearances in association with hierarchies of tags of "outline" and "body". In a case where the encoded data 32 are moved to another device, the encoding device 10 also moves the dynamic dictionary 35 created in association with the encoded data 32 and the indices 33A and 33B.

By returning to FIG. 3, the file searching unit 50 searches a file according to a specified search condition. The file searching unit 50 includes an acceptance unit 51, a searching unit 52, and an output unit 53. Hereinafter, each component of the file searching unit 50 will be described in detail.

The acceptance unit 51 accepts a search condition. For example, the acceptance unit 51 provides an input interface such as an operation screen that accepts input of a keyword or a hierarchy that is a search condition, and accepts input of a character string or a hierarchy that is a search condition.

The searching unit 52 searches a file that satisfies a search condition. For example, the searching unit 52 identifies a code that corresponds to a keyword of a search condition, with reference to the static dictionary 34 and the dynamic dictionary 35 of the dictionary data 31 that correspond to a hierarchy of the search condition. The searching unit 52 identifies a file number of a file with the identified code appearing therein, with reference to the index 33 that corresponds to a hierarchy of a search condition. In a case where a keyword of a search condition includes a plurality of words or numerical values, the searching unit 52 decomposes the keyword into the words or the numerical values to encode the words or the numerical values, and identifies a code that corresponds to each of the words or the numerical values. The searching unit 52 identifies a file number of a file with a code corresponding to each of words or numerical values appearing therein, with reference to the index 33 that corresponds to a hierarchy of a search condition. Herein, for the index 33, it may be impossible to confirm whether an order of appearances of a plurality of words or numerical values that are included in a character string of a search condition is correct. Accordingly, for example, the searching unit 50 searches whether a character string of a search condition is included in the encoding target file 30 with the identified file number. The searching unit 52 may decode a hierarchy of a search condition of the encoded data 32 that correspond to the identified file number to search whether a character string of the search condition is included therein.

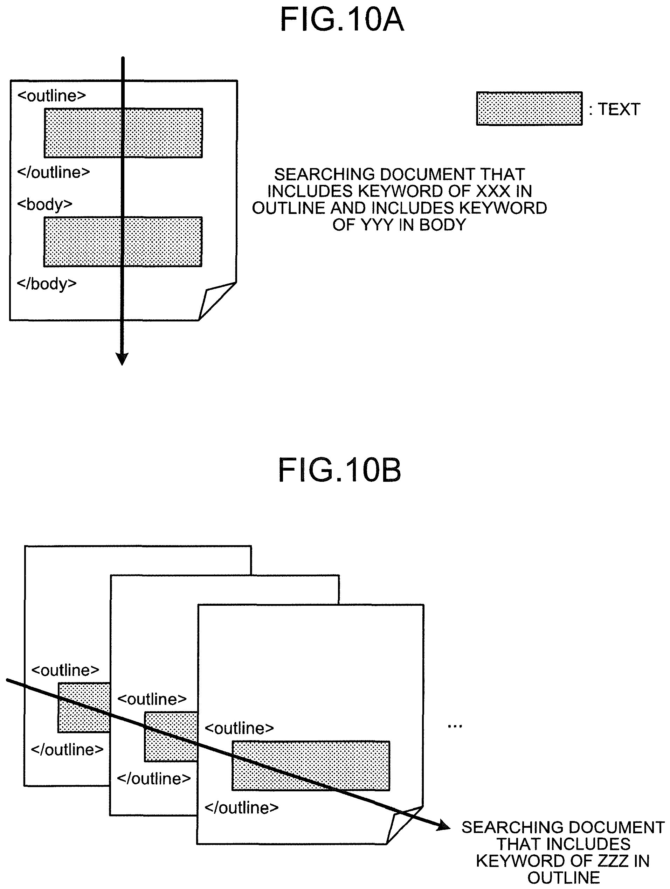

FIG. 10A is a diagram illustrating an example of searching. An example of FIG. 10A illustrates a case where whether a specified file includes a keyword of "XXX" in an "outline" and includes a keyword of "YYY" in a "body" is searched. The searching unit 52 identifies a code that corresponds to "XXX", with reference to the static dictionary 34 and the dynamic dictionary 35 of the dictionary data 31 that correspond to a hierarchy of "outline". The searching unit 52 identifies whether appearance of the code that corresponds to "XXX" is recorded in a file number of the specified file, with reference to the index 33 that corresponds to the hierarchy of "outline". The searching unit 52 identifies a code that corresponds to "YYY", with reference to the static dictionary 34 and the dynamic dictionary 35 of the dictionary data 31 that correspond to a hierarchy of "body". The searching unit 52 identifies whether appearance of the code that corresponds to "YYY" is recorded in a file number of the specified file, with reference to the index 33 that corresponds to the hierarchy of "body". In a case where a record of appearance of the code that corresponds to "XXX" and the code that corresponds to "YYY" is included in the file number of the specified file, the searching unit 52 searches whether the keyword of "XXX" is included in the "outline" and the keyword of "YYY" is included in the "body".

FIG. 10B is a diagram illustrating an example of searching. An example of FIG. 10B illustrates a case where a file is searched that includes a keyword of "ZZZ" in an "outline". The searching unit 52 identifies a code that corresponds to "ZZZ", with reference to the static dictionary 34 and the dynamic dictionary 35 of the dictionary data 31 that correspond to a hierarchy of "outline". The searching unit 52 identifies a file number of a file with the code corresponding to "ZZZ" appearing therein, with reference to the index 33 that corresponds to the hierarchy of "outline".

Thus, the file searching unit 50 can execute searching without decoding the encoded data 32, and hence, can reduce an amount of processing for searching so that processing time for searching can be reduced.

In a case where the index 33 is not created, the file searching unit 50 decodes only a specified hierarchy to search a specified character string. In this case, the file searching unit 50 can also execute searching by decoding only a specified hierarchy, and hence, can reduce an amount of processing for utilization thereof so that processing time for searching can be reduced, as compared with a case where the whole of encoded data is encoded.

The output unit 53 executes output of a result of searching. For example, in a case where a file number is identified by the searching unit 52, the output unit 53 outputs a file name of a file with the identified file number as a result of searching. On the other hand, in a case where a file number is not identified by the searching unit 52, the output unit 53 outputs no corresponding file as a result of searching.

By returning to FIG. 3, the decoding processing unit 60 decodes the encoded data 32. The decoding processing unit 60 includes an acceptance unit 61 and a decoding unit 62. Hereinafter, each component of the decoding processing unit 60 will be described in detail.

The acceptance unit 61 accepts an instruction of decoding. For example, the acceptance unit 61 provides an input interface such as an operation screen that accepts specification of the encoded data 32 that is a target for decoding, and accepts specification of the encoded data 32 that is a target for decoding. The acceptance unit 61 may accept specification of a hierarchy for decoding as well as the encoded data 32 that is a target for decoding.

The decoding unit 62 decodes the encoded data 32 that have been specified. For example, the decoding unit 62 decodes code data in each hierarchy of the encoded data 32 according to an encoding rule for the hierarchy. For example, the decoding unit 62 decodes code data in each hierarchy of the encoded data 32 into a character string by using the static dictionary 34 and the dynamic dictionary 35 of the dictionary data 31 that correspond to the hierarchy. For example, the decoding unit 62 decodes code data of tags according to a common encoding rule. The decoding unit 62 decodes code data in each hierarchy delimited by tags into a character string, with reference to the static dictionary 34 and the dynamic dictionary 35 of the dictionary data 31 that correspond to the hierarchy. In a case where specification of a hierarchy for decoding is accepted by the acceptance unit 61, the decoding unit 62 may decode only code data in a specified hierarchy.

### Processing Flow

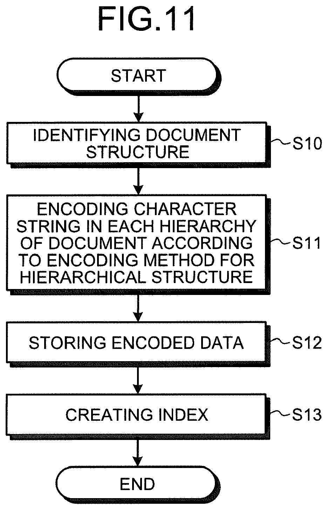

A flow of an encoding process for the encoding device 10 according to the present embodiment to encode the encoding target file 30 will be described. FIG. 11 is a flowchart illustrating an example of steps of an encoding process. Such an encoding process is executed at predetermined timing, for example, timing when a predetermined operation is executed that specifies the encoding target file 30 and instructs a start of encoding thereof.

As illustrated in FIG. 11, the identification unit 41 identifies document structure of a structured document stored in the encoding target file 30 (S10). The encoding unit 42 encodes a character string in each hierarchy of the document with the identified document structure, according to an encoding rule for a hierarchical structure that corresponds to the document structure (S11). For example, the encoding unit 42 encodes tags according to a common encoding rule. The encoding unit 42 encodes a character string on a part delimited by tags according to an encoding rule for each hierarchy. The encoding unit 42 stores encoded data in the encoded data 32 (S12). The creation unit 43 creates the index 33 that indicates a pattern that appears in an encoded character string for each encoding rule (S13), and the process is ended.

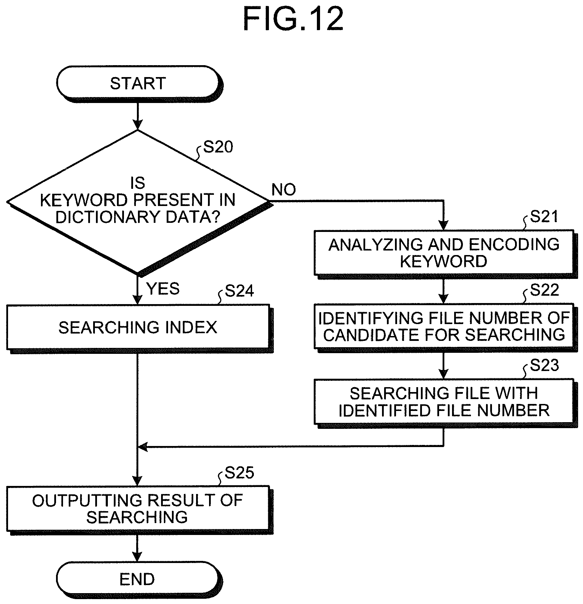

Next, a flow of a searching process for the encoding device 10 according to the present embodiment to search a file that satisfies a search condition will be described. First, a flow of a searching process in a case where a hierarchy is not specified for a search condition will be described. FIG. 12 is a flowchart illustrating an example of steps of a searching process. Such a searching process is executed at predetermined timing, for example, timing when a predetermined operation is executed that specifies a search condition and instructs a start of searching.

As illustrated in FIG. 12, the searching unit 52 determines whether a code that corresponds to a keyword of a search condition is present, with reference to the static dictionary 34 and the dynamic dictionary 35 of the dictionary data 31 (S20). In a case where a code is not present (S20, No), the searching unit 52 decomposes a keyword into words or numerical values to encode each of the words or numerical values, and identifies a code that corresponds to each of the words or the numerical values (S21). The searching unit 52 identifies a file number of a file with the code corresponding to each of the words or the numerical values appearing therein, with reference to each index 33 (S22). The searching unit 52 searches whether a character string of the search condition is included in the encoding target file 30 with the identified file number (S23).

On the other hand, in a case where a code is present (S20, Yes), the searching unit 52 identifies a file number of a file with an identified code appearing therein, with reference to the index 33 (S24).

The output unit 53 outputs a result of searching and the process is ended (S25). For example, the output unit 53 outputs a file name of the encoding target file 30 in a case where the encoding target file 30 that includes a character string of the search condition is searched or a case where a file number of the encoding target file 30 is identified by the searching unit 52.

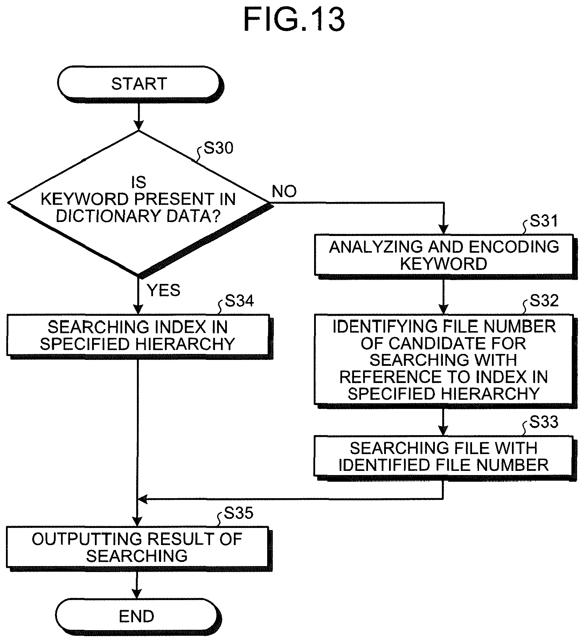

Next, a flow of a searching process in a case where a hierarchy is specified for a search condition will be described. FIG. 13 is a flowchart illustrating an example of steps of a searching process. Such a searching process is executed at predetermined timing, for example, timing when a predetermined operation is executed that specifies a search condition and instructs a start of searching.

As illustrated in FIG. 13, the searching unit 52 determines whether a code that corresponds to a keyword of a search condition is present, with reference to the static dictionary 34 and the dynamic dictionary 35 of the dictionary data 31 (S30). In a case where a code is not present (S30, No), the searching unit 52 decomposes a keyword into words or numerical values to encode each of the words or numerical values, and identifies a code that corresponds to each of the words or the numerical values (S31). The searching unit 52 identifies a file number of a file with the code that corresponds to each of the words or the numerical values appearing therein, with reference to the index 33 in a specified hierarchy (S32). The searching unit 52 searches whether a character string of the search condition is included in the encoding target file 30 with the identified file number (S33).

On the other hand, in a case where a code is present (S30, Yes), the searching unit 52 identifies a file number of a file with an identified code appearing therein, with reference to the index 33 in a specified hierarchy (S34).

The output unit 53 outputs a result of searching and the process is ended (S35). For example, the output unit 53 outputs a file name of the encoding target file 30 in a case where the encoding target file 30 that includes a character string of the search condition is searched or a case where a file number of the encoding target file 30 is identified by the searching unit 52.

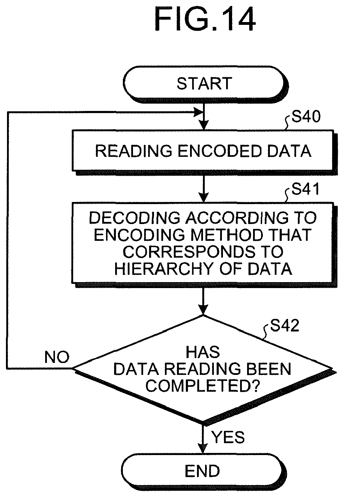

Next, a flow of a decoding process of the encoding device 10 according to the present embodiment to decode the encoded data 32 will be described. FIG. 14 is a flowchart illustrating an example of steps of a decoding process. Such a decoding process is executed at predetermined timing, for example, timing when a predetermined operation is executed that specifies the encoded data 32 that are a target for decoding and instructs a start of decoding.

The decoding unit 62 reads code data from the encoded data 32 that have been specified (S40). The decoding unit 62 decodes the read code data into a character string by using the static dictionary 34 and the dynamic dictionary 35 of the dictionary data 31 that correspond to a hierarchy (S41). The decoding unit 62 determines whether or not reading of the encoded data 32 has been completed (S42). In a case where reading has not been completed (S42, No), transfer to S40 is executed. On the other hand, in a case where reading has been completed (S42, Yes), the process is ended.

### Advantage

As described above, the encoding device 10 according to the present embodiment identifies document structure of a structured document. The encoding device 10 encodes a character string in a specific hierarchy in the document with the identified document structure, in an encoding rule for a hierarchical structure that corresponds to the document structure. Thereby, the encoding device 10 can decode only a code in a specific hierarchy part, and hence, can reduce an amount of processing for utilization thereof.

The encoding device 10 according to the present embodiment encodes character strings that define document structure in a document according to a common encoding rule. Thereby, the encoding device 10 can execute decoding in a common encoding rule to restore character strings that define document structure in a document in an identical encoding rule, and hence, the document structure can be identified quickly, so that data in a specific hierarchy can be extracted.

The encoding device 10 according to the present embodiment encodes character strings in hierarchies with similar data attributes in an identical encoding rule. Thereby, the encoding device 10 can encode character strings in hierarchies with similar data attributes by the identical dictionary data 31.

The encoding device 10 according to the present embodiment encodes a character string in a specific hierarchy, according to an encoding rule that corresponds to a characteristic of a character string that appears in the specific hierarchy. Thereby, the encoding device 10 can encode a character string in a specific hierarchy in an encoding rule that corresponds to a characteristic thereof.

The encoding device 10 according to the present embodiment executes encoding according to an encoding rule that converts a pattern with a high appearance frequency into a short code, in a single hierarchy or a plurality of hierarchies with similar data attributes. Thereby, the encoding device 10 can encode the encoding target file 30 at a high compression rate.

The encoding device 10 according to the present embodiment creates the index 33 that indicates a pattern that appears in an encoded character string. Thereby, the encoding device 10 can identify the encoding target file 30 with an appearing pattern based on the index 33.

Although the embodiment that relates to the disclosed device has been described above, the disclosed technique may be implemented in a variety of different embodiments other than the embodiment as described above. Hereinafter, other embodiments that are included in the present invention will be described.

For example, although a case where a code that corresponds to a pattern with a high appearance frequency is preliminarily stored in the static dictionary 34 of the dictionary data 31 has been described in the embodiment as described above, this is not limiting. For example, an appearance frequency of each appearing pattern such as a word or a number in a character string may be obtained by analysis in each hierarchy of a document, so as to assign a short code to a pattern with a high appearance frequency for encoding thereof. The dictionary data 31 may associate the appearing pattern and the assigned code with one another and store the appearing pattern and the assigned code.

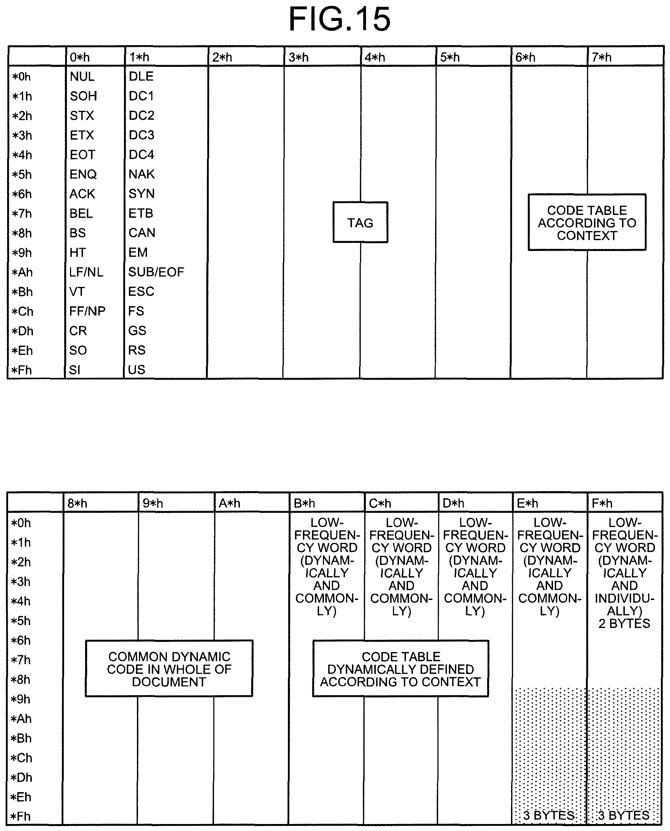

Although a case where a code is stored in the dictionary data 31 in units of hierarchical structure has been described in the embodiment describe above, this is not limiting. For example, the common dictionary data 31 may be used. A part of codes may commonly be registered and managed in the dictionary data 31 in units of hierarchical structure. FIG. 15 is a diagram illustrating an example of assignment of a code. FIG. 15 illustrates an example of assignment of a code in a case where a part of codes is commonly registered and managed in the dictionary data 31 in units of hierarchical structure. Fore codes of "8*h" to "A*h", the codes are commonly registered and managed in each hierarchy. For example, it may be efficient to manage a code in the whole of a file by the common dictionary data 31. For example, NA (non-input) or a null value (no value, that is common in character strings or numerical values) that is information of a numerical value may be represented by another value. In such a case, a code can integrally be managed by the common dictionary data 31. Even in a case where a code is integrally managed, 0.0 may be NA for a numerical value and -99.9 may be assigned to NA for another value. It is preferable to integrally manage a code for a character string as appearing through the whole of a document. For example, in a case where a name of a main character in a novel of an electronic book appears in an outline, a body, and a comment, it is preferable to integrally manage a code of the name of the main character. On the other hand, it may be efficient to manage a code in units of hierarchical structure. For example, in a case where an appropriate range is defined in units of hierarchical structure, it is preferable to manage a code in units of hierarchical structure. In a case of deviating from the appropriate range, encoding into NA or NULL is executed. For example, the dictionary data 31 are prepared within a range of 35.0 to 42.0 as a dictionary for human body temperature. In a case where 34.8 appear as a body temperature, NA or NULL is assigned thereto or a code is dynamically assigned for encoding. The dictionary data 31 are prepared within a range of 120.0 to 222.3 as a dictionary for human body height. In a case where a value of 231.2 appears as a body height, NA or NULL is assigned thereto or a code is dynamically assigned for encoding.

Each component of each device as illustrated in the drawings is functionally conceptual and is not requested to be physically configured as illustrated in the drawings. That is, a specific state of dispersion or integration in each device is not limited to that illustrated in the drawings, and a configuration thereof can be provided in such a manner that all or a part thereof can be dispersed or integrated functionally or physically in arbitrary units, depending on a variety of loads, usage, or the like. For example, respective processing units of the encoding device 10 that are the identification unit 41, the encoding unit 42, the creation unit 43, the acceptance unit 51, the searching unit 52, the output unit 53, the acceptance unit 61, and the decoding unit 62 may be integrated appropriately. A process for each of the above-mentioned processing units of the encoding device 10 may appropriately be separated into processes for a plurality of processing units. All or any part of each processing function that is executed in each processing unit can be realized by a CPU and a program that is analyzed and executed by the CPU or realized by hardware based on wired logic.

### Encoding Program

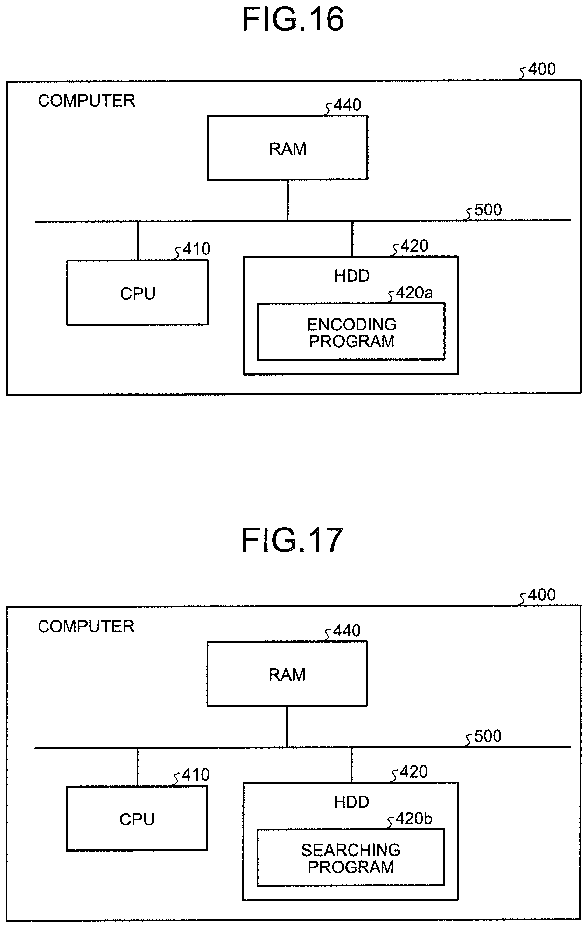

A variety of processes described for the embodiment as described above can also be realized by executing a preliminarily prepared program in a computer system such as a personal computer or a work station. Hereinafter, an example of a computer system that executes a program that has a function identical to that of the embodiment as described above will be described. First, an encoding program for executing an encoding process will be described. FIG. 16 is a diagram illustrating an example of a computer that executes an encoding program.

As illustrated in FIG. 16, a computer 400 includes a Central Processing Unit (CPU) 410, a Hard Disk Drive (HDD) 420, and a Random Access Memory (RAM) 440. Each of these units 410 to 440 are connected to one another though a bus 500.

The HDD 420 preliminarily stores an encoding program 420a that fulfills functions similar to those of the identification unit 41, the encoding unit 42, and the creation unit 43 of the encoding device 10 as described above. The encoding program 420a may be divided appropriately.

The HDD 420 stores a variety of information. For example, the HDD 420 stores a variety of data that are used for an OS or encoding.

The CPU 410 reads the encoding program 420a from the HDD 420 and executes the encoding program 420a, so that an operation similar to that of each processing unit of the embodiment is executed. That is, the encoding program 420a executes operations similar to those of the identification unit 41, the encoding unit 42, and the creation unit 43.

The encoding program 420a as described above is not requested to be stored in the HDD 420 from the start.

### Searching Program

Next, a searching program for searching the encoded data 32 will be described. FIG. 17 is a diagram illustrating an example of a computer that executes a searching program. A part identical to that of FIG. 16 will be provided with an identical symbol to omit a description thereof.

As illustrated in FIG. 17, the HDD 420 preliminarily stores a searching program 420b that fulfills functions similar to those of the acceptance unit 51, the searching unit 52, and the output unit 53 of the encoding device 10 as described above. The searching program 420b may be divided appropriately.

The HDD 420 stores a variety of information. For example, the HDD 420 stores a variety of data that are used for an OS or searching.

The CPU 410 reads the searching program 420b from the HDD 420 and executes the searching program 420b, so that an operation similar to that of each processing unit of the embodiment is executed. That is, the searching program 420b executes operations similar to those of the acceptance unit 51, the searching unit 52, and the output unit 53.

The searching program 420b as described above is also not requested to be stored in the HDD 420 from the start.

### Decoding Program

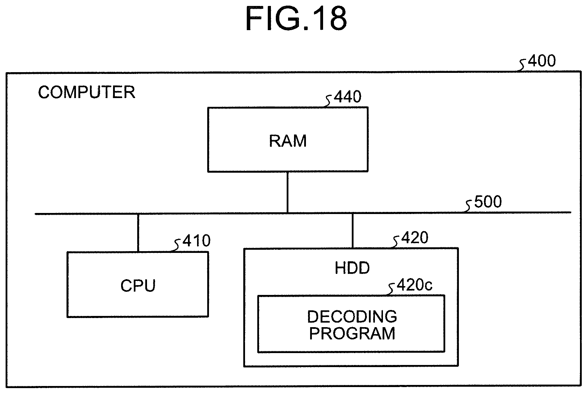

Next, a decoding program for decoding a file that satisfies a searching condition will be described. FIG. 18 is a diagram illustrating an example of a computer that executes a decoding program. A part identical to those of FIG. 16 and FIG. 17 will be provided with an identical symbol to omit a description thereof.

As illustrated in FIG. 17, the HDD 420 preliminarily stores a decoding program 420c that fulfills functions similar to those of the acceptance unit 61 and the decoding unit 62 of the encoding device 10 as described above. The decoding program 420c may be divided appropriately.

The HDD 420 stores a variety of information. For example, the HDD 420 stores a variety of data that are used for an OS or decoding.

The CPU 410 reads the decoding program 420c from the HDD 420 and executes the decoding program 420c, so that an operation similar to that of each processing unit of the embodiment is executed. That is, the decoding program 420c executes operations similar to those of the acceptance unit 61 and the decoding unit 62.

The decoding program 420c as described above is also not requested to be stored in the HDD 420 from the start.

For example, the encoding program 420a, the searching program 420b, the decoding program 420c may be stored in a "portable physical medium" such as a flexible disk (FD), a CD-ROM, a DVD disk, a magneto-optical disk, or an IC card that is inserted into the computer 400. The computer 400 may read a program from a portable physical medium and execute the program.

A program is stored in "another computer (or server)" or the like that is connected to the computer 400 through a public line, the internet, a LAN, a WAN, or the like. The computer 400 may read a program from another computer (or server) and execute the program.

According to one embodiment, an advantage is provided that encoding that corresponds to document structure can be executed.

## Claims

1. An encoding program (420a) that causes a computer to execute a process comprising:
identifying document structure of a first structured document; and
encoding a character string in a specific hierarchy of the first structured document with an encoding rule corresponding to the specific hierarchy utilizing the document structure.

2. The encoding program (420a) according to claim 1, wherein the encoding is to encode character strings that define document structure of the first document according to a common encoding rule.

3. The encoding program (420a) according to claim 1 or 2, wherein the encoding is to encode character strings in hierarchies with similar data attributes according to an identical encoding rule.

4. The encoding program (420a) according to any one of claims 1 to 3, wherein the encoding is to encode a character string in the specific hierarchy according to an encoding rule corresponding to a characteristic of a character string that appears in the specific hierarchy.

5. The encoding program (420a) according to any one of claims 1 to 4, wherein the encoding is to execute encoding according to an encoding rule that converts a pattern with a high appearance frequency into a short code, in a single hierarchy or a plurality of hierarchies with similar data attributes.

6. The encoding program (420a) according to any one of claims 1 to 5, further causing a computer to execute creating an index that indicates a pattern that appears in an encoded character string, for each encoding rule.

7. An encoding method comprising:
identifying document structure of a first structured document; and
encoding a character string in a specific hierarchy of the first structured document with an encoding rule corresponding to the specific hierarchy utilizing the document structure.

8. An encoding device (10) comprising:
an identification unit (41) configured to identify document structure of a first structured document; and
an encoding unit (42) configured to encode a character string in a specific hierarchy of the first structured document with an encoding rule corresponding to the specific hierarchy utilizing the document structure.

9. A decoding program (420c) that causes a computer to execute a process comprising:
decoding a character string in a specific hierarchy of encoded data (32) provided by encoding a first structured document according to an encoding rule for hierarchical structure corresponding to document structure of the first document, according to an encoding rule for the specific hierarchy.

10. A decoding method comprising:
decoding a character string in a specific hierarchy of encoded data (32) provided by encoding a first structured document according to an encoding rule for hierarchical structure corresponding to document structure of the first document, according to an encoding rule for the specific hierarchy.

11. A decoding device comprising:
a decoding unit (62) configured to decode a character string in a specific hierarchy of encoded data (32) provided by encoding a first structured document according to an encoding rule for hierarchical structure corresponding to document structure of the first document, according to an encoding rule for the specific hierarchy.
